# EUROPEAN PATENT SPECIFICATION

(11) **EP 1 796 576 B1**
(45) Date of publication and mention of the grant of the patent: **26.03.2008**
(21) Application number: 05794552.9
(22) Date of filing: 07.09.2005
(51) Int. Cl.: A61C 11/00

(54) **METHOD USED TO POSITION TEETH IN A DENTAL ARTICULATOR AND RELEVANT DENTAL ARTICULATOR**
VERFAHREN ZUR POSITIONIERUNG VON ZÄHNEN IN EINEM DENTALARTIKULATOR UND RELEVANTER DENTALARTIKULATOR
PROCEDE DE POSITIONNEMENT DES DENTS DANS UN ARTICULATEUR DENTAIRE ET ARTICULATEUR DENTAIRE AFFERENT

(30) Priority: 10.09.2004 IT BO20040559
(43) Date of publication of application: 20.06.2007
(73) Proprietor: Giannetti, Luigi, 63030 Acquaviva Picena (IT)
(72) Inventor: Giannetti, Luigi, 63030 Acquaviva Picena (IT)
(74) Representative: Baldi, Claudio
(86) International application number: PCT/IT2005/000511
(87) International publication number: WO 2006/027815

(56) References cited:
- US-A- 3 616 537
- US-A1- 2004 131 991
- US-B1- 6 413 085

## Description

The present invention refers to a method used to position teeth in a dental articulator.

Dental articulators of known type comprise a lower mounting plate adapted to support a mandibular model with mandibular crest; an upper mounting plate adapted to support a maxillary model with maxillary crest; and a mounting plate adapted to be fixed to the upper mounting plate to position teeth between the mandibular model and mounting plate, such as US 3616537.

Since the mounting plate is not provided with reference marks - or it is provided with standard reference marks for all patients - teeth are normally positioned on the mandibular model by placing one tooth at a time between the mandibular crest and the mounting plate, replacing the mounting plate with the maxillary model and controlling the tooth orientation with respect to the maxillary crest.

In view of the above, it appears evident that the positioning of teeth on the mandibular model requires the dental technician to execute a relatively complex sequence of lengthy operations.

The purpose of the present invention is to provide a method used to position teeth in a dental articulator without the aforementioned inconveniences and characterized by simple, inexpensive implementation.

The present invention discloses a method used to position teeth in a dental articulator as claimed in claim 1.

Moreover, the present invention refers to a dental articulator.

The present invention refers to a dental articulator as claimed in claim 7.

The description of the present invention continues with reference to the enclosed drawings, which illustrate a non-limiting possible embodiment of the invention, whereby:
Fig. 1 is a diagrammatic perspective view of a preferred embodiment of the dental articulator of the invention, with parts removed for clarity purposes;
Figs. 2 to 4 are the same as Fig. 1 and illustrate the dental articulator in three different operating positions;
Fig. 5 is a plan view of a detail of Figs. 3 and 4; and
Fig. 6 is a plan view of a detail of the dental articulator of Fig. 1.

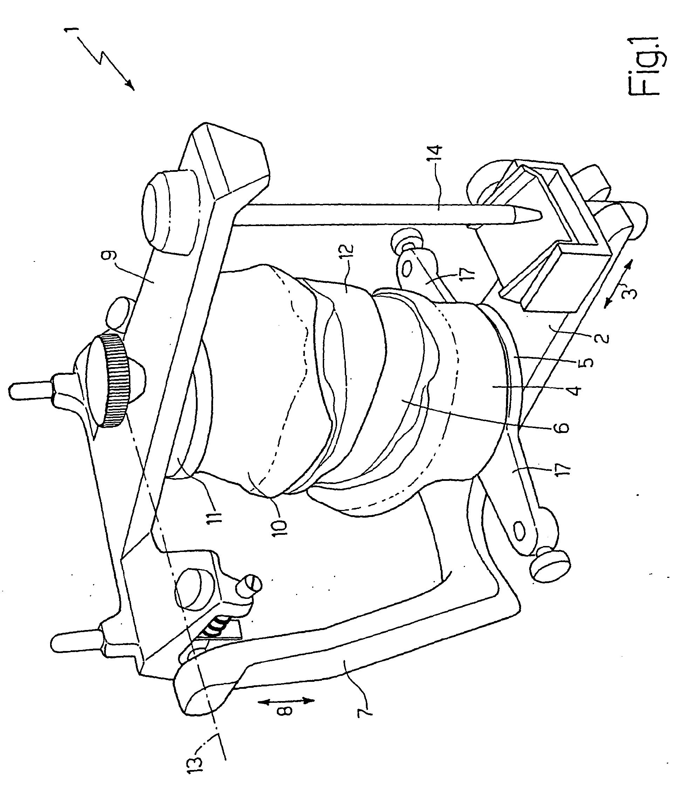

With reference to Fig. 1, numeral 1 refers to a dental articulator used to fabricate dental prostheses and simulate their functional operation.

It must be noted that articulator 1 is used to fabricate total dental prostheses for patients with mandibular and maxillary dental arches completely without teeth, and partial dental prostheses for patients with mandibular and maxillary dental arches only partially without teeth, as well as other types of dental prostheses.

Articulator 1 comprises a lower mounting plate 2, with basically flat elongated shape, extending in horizontal direction 3 and supporting a mandibular model 4 fitted to the plate 2 by means of an intermediate fixing plate 5, and provided with occlusion rim 6.

Moreover, articulator 1 comprises a vertical post 7, which is basically shaped as a fork and extends upwards from plate 2 in direction 8 basically orthogonal to direction 3, and an upper mounting plate 9 with basically flat shape, adapted to support a maxillary model 10 fixed to the plate 9 by means of an intermediate fixing plate 11 and provided with occlusion rim 12.

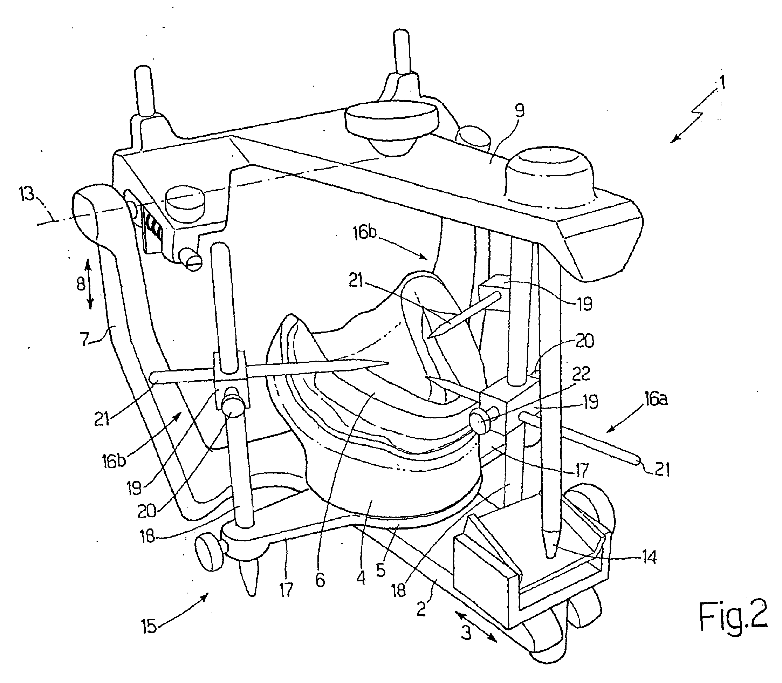

According to the known technique, plate 9 is fixed to post 7 and moves with respect to plate 2 around axis 13 with orthogonal fulcrum to directions 3 and 8 and under the control of a strut 14 located between plates 2 and 9 to permit functional simulation of dental prostheses mounted on articulator 1. As shown in Fig. 2, articulator 1 is also provided with a detection device 15 used to acquire the position of an upper plane of rim 6 in direction 8.

The device 15 comprises three reference elements 16, of which one element (16a) is mounted on plate 2 in a removable way and two elements (16b) are mounted in a movable way on corresponding support brackets 17 that protrude with radial direction outwards of plate 5.

Each element 16a, 16b comprises a guide rod 18 that protrudes upwards in direction 8 from plate 2 and, respectively, from bracket 17, and a runner 19 adapted to slide on rod 18 to make rectilinear travels along rod 18 in direction 8, coupled in a rotary way to rod 18 and axially blocked on rod 18 by means of a blocking screw 20. Moreover, the element 16a, 16b comprises a reference rod 21 that extends through the runner 19 transversally to direction 8, is coupled to runner 19 in an axially sliding way to make rectilinear travels in a direction that depends on the orientation of runner 19 around rod 18 and blocked on the runner 19 by means of a blocking screw 22.

During use, once the maxillary model 19 and the rim 12 are disassembled from plate 9, each runner 19 is moved along the rod 18 in direction 8 to engage rod 21 with rim 6, then is axially blocked in direction 8 by means of screw 20 to allow rod 21 to define, together with rods 21 of the other runners 19, the configuration of the rim 6 (Fig. 2) and is finally moved along the corresponding rod 18 in such a way as to disengage rod 21 from rim 6 and disengage rim 6 from the mandibular model 4.

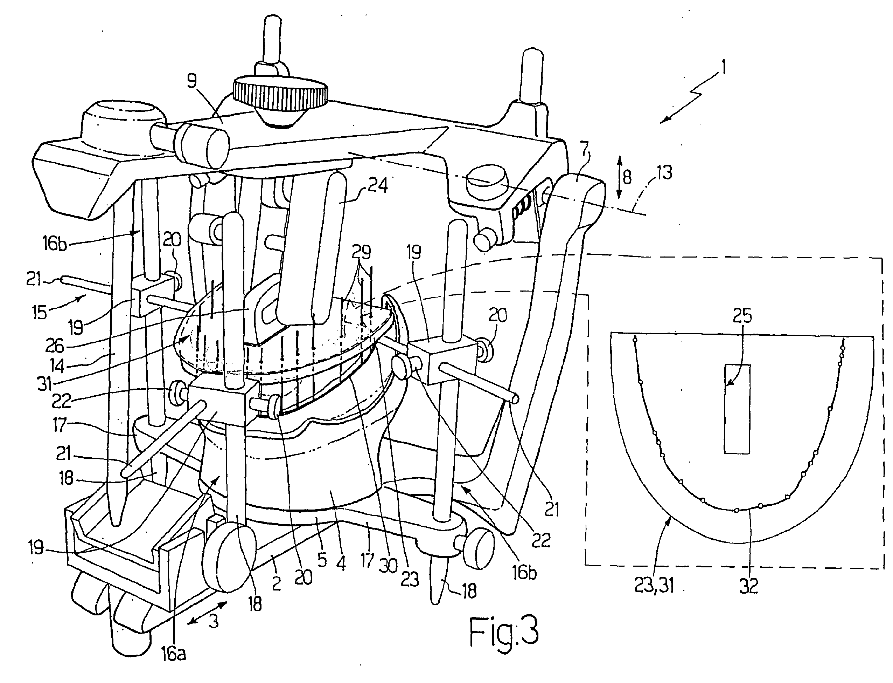

With reference to Fig. 3, runners 19 are moved around corresponding rods 18 in such a way as to place rods 21 in operating position and allow for correct positioning of a mounting plate 21 above rods 21, which has a basically spherical shape and is connected to upper plate 9 by means of a connection element 24 and is provided with a central slot 25 on plate 23 and engaged by a fixing element 26 used to connect the plate 23 to the element 24.

According to an embodiment of the invention not illustrated in the enclosed Figures, plate 23 has a basically flat shape.

According to a further embodiment of the invention not illustrated in the enclosed Figures, the detection device 15 is eliminated and the position of plate 23 in direction 8 is experimentally determined by means of the teeth height with respect to mandibular model 4 and maxillary model 10.

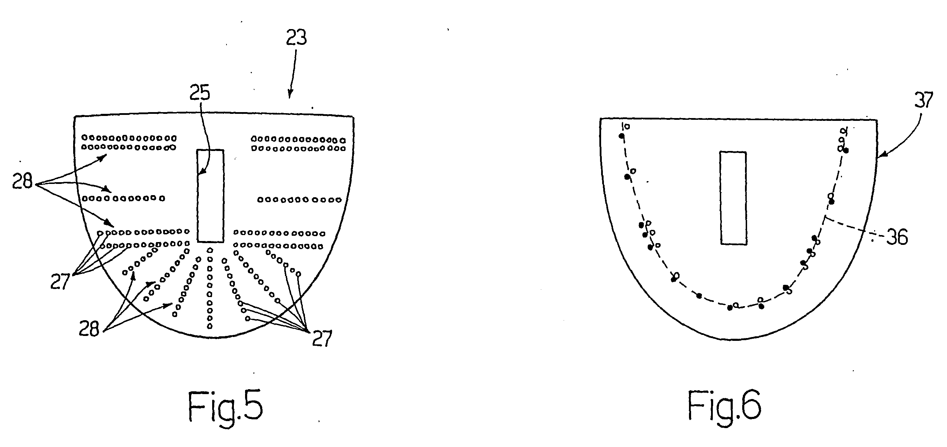

With reference to Fig. 5, plate 23 is also provided with a plurality of holes 27 drilled through plate 23 perpendicularly to plate 23 and grouped in groups 28 of holes 27 distributed around the slot 25 according to teeth distribution in a dental arch and equal in number to the number of teeth in a dental arch.

As shown in Fig. 3, for each group 28 of holes 27 the articulator 1 comprises at least an elongated rod 29 that, during use, is inserted in hole 27 that corresponds to a mandibular crest 30 of mandibular model 4 and through a transparent flexible plate 31 mounted on element 26 in contact with plate 23.

In view of the above, rods 29 identify a first sequence of points on plate 31 that define a first teeth distribution line along the mandibular crest 30 of the mandibular model 4.

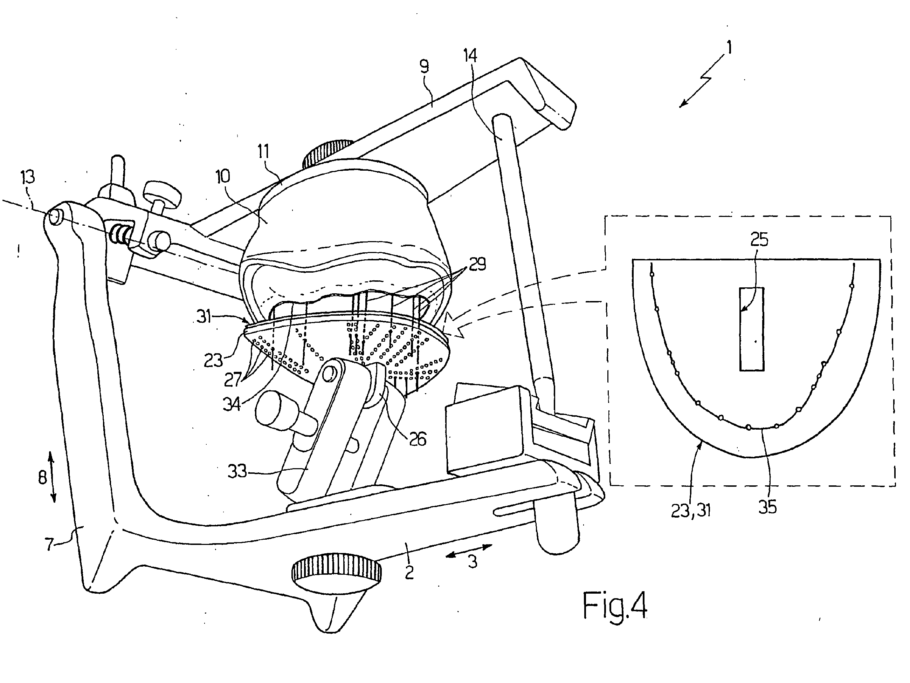

As shown in Fig. 4, once line 32 is identified, the mandibular model 4 is disengaged from the lower mounting plate 2; plate 23 is fitted, without modifying its reference position, to plate 2 by means of a connection element 33 identical to element 24; element 24 is disengaged from element 26 and upper mounting plate 9; and maxillary model 10 is mounted on plate 9.

Now, rods 29 are inserted through holes 27 in a maxillary crest 34 of the maxillary model 10 in such a way as to identify a second sequence of holes on plate 31 that define a second teeth distribution line 35 along crest 34.

According to an embodiment of the invention not illustrated in the enclosed Figures, rods 29 are replaced, for instance, with a laser device that projects laser rays through plate 23 and crests 30, 34 to identify lines 32 and 35.

With reference to Fig. 6, lines 32 and 35 are interpolated, for instance by means of a processing application, to define a median teeth distribution line 36 along crests 30 and 34 and line 36 is displayed on a transparent flexible plate 37 identical to plate 31.

Once line 36 is identified, the maxillary model 10 is disengaged from upper mounting plate 9; a new mounting plate (not shown) same as plate 23 without holes 27 is mounted on element 26 in the same reference position as plate 23 and engaged to plate 9 by means of connection element 24; plate 23 is disengaged from element 26; element 33 is disengaged from element 26 and lower mounting plate 2; plate 37 is mounted on element 26 in contact with the new mounting plate; and mandibular model 4 is remounted on plate 2.

Finally, teeth are position between the mandibular model 4 and mounting plate 23 in mandibular crest 30 on one side and in median distribution line 36 on the other side.

Connection elements 24, 33 are adapted to maintain mounting plate 23 always in the same reference position during acquisition of both teeth distribution line 32 along mandibular crest 30 and teeth distribution line 35 along maxillary crest 34 and the median distribution line 36 is adapted to position teeth on mandibular model 4 accurately with one mounting operation.

According to an embodiment of the invention not illustrated in the enclosed Figures, the mandibular model 4 and/or maxillary model 10 are provided with tooth stumps protruding from the mandibular crest 30 and/or maxillary crest 34. It must be noted that:
the term "stump" refers both to natural and artificial stumps originated from implants;
in case of stumps, the distribution lines 32 and/or 35 are determined by inserting rods 29 through mounting plate 23 in the stumps; and
in case of stumps, the term "tooth" refers to the tooth reconstructed on the stump with artificial material for dental prostheses.

## Claims

1. Method used to position teeth in a dental articulator that comprises a first mounting plate (2) adapted to fit a mandibular model (4) with a mandibular crest (30) and/or tooth stumps protruding from the mandibular model (4) and a second mounting plate (9) adapted to fit a maxillary model (10) with a maxillary crest (34) and/or tooth stumps protruding from the maxillary model (10), method that comprises steps to position and block a mounting plate (23) in a determined reference position that corresponds to the height of the teeth in the mandibular model (4); it being **characterized by** the fact that it also comprises steps to engage positioning means (29) through the mounting plate (23) and in the mandibular crest (30) and/or relevant stumps to identify a first teeth distribution line (32) on mandibular model (4); engage positioning means (29) through the mounting plate (23) and in the maxillary crest (34) and/or relevant stumps to identify a second teeth distribution line (35) on maxillary model (10); interpolate the first and second distribution lines (32, 35) to identify a median teeth distribution line (36) on the mandibular and maxillary models (4, 10) on the mounting plate (23); and position teeth between the median distribution line (36) and the mandibular crest (30) and/or stumps.

2. Method as defined in claim 1, in which the positioning means (29) are engaged through the mounting plate (23) and in the mandibular and maxillary crests (30, 24) and/or stumps by maintaining the mounting plate (23) in the reference position.

3. Method as defined in claim 1 or 2 that comprises steps to position the reference means (16a, 16b) above and in contact with an occlusion rim (6) mounted on the mandibular model (4); the mounting plate (23) being positioned and blocked in the reference position determined above and in contact with reference means (16a, 16b).

4. Method as defined in claim 3, in which the reference means (16a, 16b) are moved from the operating position above and in contact with the occlusion rim (6) and the rest position, in which the reference means (16a, 16b) disengage the occlusion rim (6) to disengage the occlusion rim (6) from the mandibular model (4).

5. Method as defined in any of above claims, in which the positioning means (29) are inserted through the mounting plate (23) in position basically perpendicular to mounting plate (23).

6. Method as defined in any of above claims, in which the positioning means (29) comprise a plurality of pin elements (29) that are inserted through at least one pierceable element (31) fitted to mounting plate (23).

7. Dental articulator that comprises a first mounting plate (2) adapted to fit a mandibular model (4) with a mandibular crest (30) and/or tooth stumps protruding from the mandibular model (4); a second mounting plate (9) adapted to fit a maxillary model (10) with a maxillary crest (34) and/or tooth stumps protruding from the maxillary model (10); a mounting plate (23) adapted to mount teeth on the mandibular model (4); and blocking means (24, 33) adapted to block and maintain the mounting plate (23) in a determined reference position that corresponds to the height of teeth of the mandibular model (4); and **characterised in that** it also comprises positioning means (29) adapted to engage through the mounting plate (23) and in the mandibular and maxillary crests (30, 34) and/or relevant stumps to identify on the mounting plate (23) a first teeth distribution line (32) on the mandibular model (4) and a second teeth distribution line (35) on the maxillary model during use.

8. Dental articulator as defined in claim 7, in which the mounting plate (23) is provided with a plurality of holes (27) drilled on the mounting plate (23); with the positioning means (29) that comprise a plurality of pin elements (29) adapted to be engaged through the holes (27) during use.

9. Dental articulator as defined in claim 8, in which the holes (27) are basically perpendicular to the mounting plate (23).

10. Dental articulator as defined in any of claims 7 to 9 that also comprises reference means (16a, 16b) positioned above and in contact with an occlusion rim (6) mounted on the mandibular model (4) and adapted to support the mounting plate (23) during positioning and blocking of the mounting plate (23) in reference position.

11. Dental articulator as defined in claim 10, in which reference means (16a, 16b) move between the operating position above and in contact with the occlusion rim (6) and the rest position, in which the reference means (16a, 16b) disengage the occlusion rim (6) to disengage the occlusion rim (6) from the mandibular model (4).

12. Dental articulator as defined in any of claims 7 to 11, which also comprises a pierceable element (31) that can be mounted on the mounting plate (23) and adapted to be engaged, during use, by the positioning means (29); the first and second distribution lines (32, 35) being defined on the pierceable element (31).

13. Dental articulator as defined in any of claims 7 to 12, which also comprises logic control means to interpolate the first and second distribution line (32, 35) and identify a median teeth distribution line (36) on the mandibular and maxillary models (4, 10).

## Patentansprüche

1. Verfahren zum Positionieren von Zähnen in einem Dentalartikulator, umfassend eine erste Montageplatte (2) zur Befestigung eines Unterkiefermodells (4) mit einem Unterkieferkamm (30) und/oder der aus dem Unterkiefermodell (4) hervorstehenden Zahnstümpfen sowie eine zweite Montageplatte (9) zur Befestigung eines Oberkiefermodells (10) mit einem Kieferkamm (34) und/oder aus dem Oberkiefermodell (10) hervorstehenden Zahnstümpfen, wobei das Verfahren die Phasen zum Positionieren und Blockieren der Montageplatte (23) in einer bestimmten Bezugsposition umfasst, die der Höhe der Zähne im Unterkiefermodell (4) entspricht; **dadurch gekennzeichnet, dass** es auch die Phasen des Eingreifens von Positionierungsmitteln (29) durch die Montageplatte (23) in den Unterkieferkamm (30) und/oder die entsprechenden Zahnstümpfe zur Festlegung einer ersten Verteilungslinie (32) der Zähne auf dem Unterkiefermodell (4); des Eingreifens von Positionierungsmitteln (29) durch die Montageplatte (23) in den Oberkieferkamm (34) und/oder die entsprechenden Zahnstümpfe zur Festlegung einer zweiten Verteilungslinie (35) der Zähne auf dem Oberkiefermodell (10); des Interpolierens der ersten und der zweiten Verteilungslinie (32, 35) zur Festlegung einer medianen Verteilungslinie (36) der Zähne auf der Montageplatte (23) auf dem Unterkiefer- und Oberkiefermodell (4, 10); und des Positionierens der Zähne zwischen der medianen Verteilungslinie (36) und dem Unterkieferkamm (30) und/oder den entsprechenden Zahnstümpfen umfasst.

2. Verfahren gemäß Anspruch 1, wobei während des Eingreifens der Positionierungsmittel (29) durch die Montageplatte (23) hindurch in die Oberkiefer- und Unterkieferkämme (30, 34) und/oder die entsprechenden Zahnstümpfe die Montageplatte (23) stets in der Bezugsposition gehalten wird.

3. Verfahren gemäß Anspruch 1 oder 2, welches außerdem die Phase des Positionierens der Bezugsmittel (16a, 16b) oberhalb und in Kontakt mit einem Bisswall (6) umfasst, der auf dem Unterkiefermodell (4) montiert ist; wobei die Montageplatte (23) in der Bezugsposition positioniert und blockiert wird, die oberhalb und in Kontakt mit den Bezugsmitteln (16a, 16b) bestimmt wird.

4. Verfahren gemäß Anspruch 3, wobei die Bezugsmittel (16a, 16b) zwischen einer Arbeitsposition oberhalb und in Kontakt mit dem Bisswall (6) und einer Ruheposition bewegt werden, bei der die Bezugsmittel (16a, 16b) den Bisswall loslassen (6), damit der Bisswall (6) aus dem Unterkiefermodell (4) entkoppelt wird.

5. Verfahren gemäß einem beliebigen der vorstehenden Ansprüche, wobei die Positionierungsmittel (29) durch die Montageplatte 23) hindurch in eine im Wesentlichen senkrecht zur Montageplatte (23) befindliche Position eingesetzt werden.

6. Verfahren gemäß einem beliebigen der vorstehenden Ansprüche, wobei die Positionierungsmittel (29) eine Vielzahl von Stiftelementen (29) umfassen, die durch mindestens ein durchbohrbares Element (31) hindurchgesteckt werden, das mit der Montageplatte (23) verbunden ist.

7. Zahnartikulator umfassend eine erste Montageplatte (2) zur Befestigung eine Unterkiefermodells (4) mit einem Unterkieferkamm (30) und/oder der aus dem Unterkiefermodell (4) hervorstehenden Zahnstümpfen; eine zweite Montageplatte (9) zur Befestigung eines Oberkiefermodells (10) mit einem Kieferkamm (34) und/oder aus dem Oberkiefermodell (10) hervorstehenden Zahnstümpfen; eine Montageplatte (23) zur Montage der Zähne auf dem Unterkiefermodell (4); sowie Blockiermittel (24, 33), um die Montageplatte (23) in einer bestimmten Bezugsposition zu halten, die der Höhe der Zähne des Unterkiefermodells (4) entspricht; und **dadurch gekennzeichnet, dass** er außerdem Positionierungsmittel (29) umfasst, die durch die Montageplatte (23) hindurch in den Unterkiefer- und den Oberkieferkamm (30, 34) und/oder die entsprechenden Stümpfe eingreifen, um während des Gebrauchs auf der Montageplatte (23) eine erste Verteilungslinie (32) der Zähne auf dem Unterkiefermodell (4) und eine zweite Verteilungslinie (35) der Zähne auf dem Oberkiefermodell (10) festzulegen.

8. Zahnartikulator gemäß Anspruch 7, wobei dei Montageplatte (23) eine Vielzahl von Löchern (27) umfasst, die durch die Montageplatte (23) hindurch herausgearbeitet sind; wobei die Positionierungsmittel (29) eine Vielzahl von Stiftelementen (29) umfassen, die dazu dienen, während des Gebrauchs durch die Löcher (27) hindurch einzugreifen.

9. Zahnartikulator gemäß Anspruch 8, wobei sich die Löcher (27) im Wesentlichen senkrecht zur Montageplatte (23) befinden.

10. Zahnartikulator gemäß einem beliebigen Anspruch von 7 bis 9, der außerdem Bezugsmittel (16a, 16b) umfasst, die oberhalb und in Kontakt mit einem Bisswall (6) auf dem Unterkiefermodell (4) montiert sind und dazu dienen, die Montageplatte (23) während des Positionierens und Blockierens der Montageplatte (23) in der Bezugsposition zu halten.

11. Zahnartikulator gemäß Anspruch 10, wobei die Bezugsmittel (16a, 16b) zwischen einer Arbeitsposition oberhalb und in Kontakt mit dem Bisswall (6) und einer Ruheposition bewegt werden, bei der die Bezugsmittel (16a, 16b) den Bisswall (6) loslassen, damit der Bisswall (6) aus dem Unterkiefermodell (4) entkoppelt wird.

12. Zahnartikulator gemäß einem beliebigen Anspruch von 7 bis 11, der außerdem mindestens ein durchbohrbares Element (31) umfasst, das auf der Montageplatte (23) montiert werden kann, damit während des Gebrauchs die Positionierungsmittel (29) eingreifen können; wobei die erste und die zweite Verteilungslinie (32, 35) auf dem durchbohrbaren Element (31) definiert sind.

13. Zahnartikulator gemäß einem beliebigen Anspruch von 7 bis 12, der außerdem Steuerelelektronikmittel zum Interpolieren der ersten und der zweiten Verteilungslinie (32, 35) und zum Festlegen einer medianen Verteilungslinie (36) der Zähne auf den Unterkiefer- und Oberkiefermodellen (4, 10) umfasst.

## Revendications

1. Méthode pour le positionnement de dents dans un articulé dentaire comprenant une première plaque de support (2) pour l'ancrage d'un modèle mandibulaire (4) présentant une crête mandibulaire (30) et/ou des moignons de dents forjetant du modèle mandibulaire (4) même et une seconde plaque de support (9) pour l'ancrage d'un modèle maxillaire (10) présentant une crête maxillaire (34) et/ou des moignons de dents forjetant du modèle maxillaire (10) même, la méthode comprenant les phases destinées à positionner et à bloquer une plaque de montage (23) sur une position de référence déterminée correspondante à la hauteur des dents du modèle mandibulaire (4) ; la dite méthode étant **caractérisée en ce qu'**elle comprend, en outre, les phases destinées à engager des moyens de positionnement (29) à travers la plaque de montage (23) et en correspondance de la dite crête mandibulaire (30) et/ou des relatifs moignons, de manière à identifier une première ligne de distribution (32) des dents sur le modèle mandibulaire (4) ; d'engager des moyens de positionnement (29) à travers la plaque de montage (23) et en correspondance de la crête maxillaire (34) et/ou des relatifs moignons, de manière à identifier une seconde ligne de distribution (35) des dents sur le modèle maxillaire (10) ; d'interpoler les dites première et seconde lignes de distribution (32, 35) pour identifier, sur la plaque de montage (23), une ligne de distribution médiane (36) des dents sur les modèles mandibulaire et maxillaire (4, 10) ; ainsi que positionner les dents entre la dite ligne de distribution médiane (36) et la dite crête mandibulaire (30) et/ou les relatifs moignons.

2. Méthode selon la revendication 1, où l'engagement des moyens de positionnement (29) à travers la plaque de montage (23) et en correspondance des crêtes mandibulaire et maxillaire (30, 24) et/ou des relatifs moignons est réalisé en maintenant la plaque de montage (23) toujours dans la dite position de référence.

3. Méthode selon la revendication 1 ou 2 et comprenant, en outre, la phase destinée à positionner les moyens de référence (16a, 16b) au-dessus et en contact d'un tampon occlusif (6) monté sur le dit modèle mandibulaire (4) ; la plaque de montage (23) étant positionnée et bloquée sur la dite position de référence déterminée au-dessus et en contact des dits moyens de référence (16a, 16b).

4. Méthode selon la revendication 3, où les moyens de référence (16a, 16b) sont déplacés entre une position opérationnelle au-dessus et en contact du dit tampon occlusif (6) et une position de repos, où les dits moyens de référence (16a, 16b) désengagent le tampon occlusif (6) afin de consentir de désengager le tampon occlusif (6) même du modèle mandibulaire (4).

5. Méthode selon l'une quelconque des revendications précédentes, où les dits moyens de positionnement (29) sont insérés à travers la plaque de montage (23) dans une position substantiellement perpendiculaire à la plaque de montage (23) même.

6. Méthode selon l'une quelconque des revendications précédentes, où les dits moyens de positionnement (29) comprennent une pluralité d'éléments à pivot (29) qui sont insérés à travers au moins un élément perforable (31) associé à la dite plaque de montage (23).

7. Articulé dentaire comprenant une première plaque de support (2) pour l'ancrage d'un modèle mandibulaire (4) présentant une crête mandibulaire (30) et/ou des moignons de dents forjetant du modèle mandibulaire (4) même ; une seconde plaque de support (9) pour l'ancrage d'un modèle maxillaire (10) présentant une crête maxillaire (34) et/ou des moignons de dents forjetant du modèle maxillaire (10) même ; une plaque de montage (23) apte à consentir le montage de dents sur le dit modèle mandibulaire (4) ; ainsi que des moyens de blocage (24, 33) pour bloquer et maintenir la plaque de montage (23) dans une position de référence déterminée, correspondante à la hauteur des dents du modèle mandibulaire (4) ; et **caractérisée en ce qu'**elle comprend, en outre, des moyens de positionnement (29) aptes à être engagés, en usage, à travers la plaque de montage (23) et en correspondance des dites crêtes mandibulaire et maxillaire (30, 34) et/ou des relatifs moignons de manière à identifier sur la plaque de montage (23) même une première ligne de distribution (32) des dents sur le modèle mandibulaire (4) et une seconde ligne de distribution (35) des dents sur le modèle maxillaire (10).

8. Articulé dentaire selon la revendication 7, où la plaque de montage (23) présente une pluralité de trous (27) réalisés à travers la plaque de montage (23) même ; les moyens de positionnement (29) comprenant une pluralité d'éléments à pivot (29) aptes à être engagés, en usage, à travers les dits trous (27).

9. Articulé dentaire selon la revendication 8, où les dits trous (27) sont substantiellement perpendiculaires à la plaque de montage (23).

10. Articulé dentaire selon l'une quelconque des revendications de 7 à 9 et comprenant, en outre, des moyens de référence (16a, 16b) qui peuvent être positionnés au-dessus et en contact d'un tampon occlusif (6) monté sur le dit modèle mandibulaire (4) et aptes à supporter la plaque de montage (23) pendant le positionnement et le blocage de la plaque de montage (23) même dans la dite position de référence.

11. Articulé dentaire selon la revendication 10, où les moyens de référence (16a, 16b) sont mobiles entre une position opérationnelle au-dessus et en contact du dit tampon occlusif (6) et une position de repos, où les dits moyens de référence (16a, 16b) désengagent le tampon occlusif (6) afin de consentir de désengager le tampon occlusif (6) même du modèle mandibulaire (4).

12. Articulé dentaire selon l'une quelconque des revendications de 7 à 11 et comprenant, en outre, au moins un élément perforable (31) qui peut être monté sur la dite plaque de montage (23) pour être engagé, en usage, par les des dits moyens de positionnement (29) ; les dites première et seconde lignes de distribution (32, 35) étant définies sur le dit élément perforable (31).

13. Articulé dentaire selon l'une quelconque des revendications de 7 à 12 et comprenant, en outre, des moyens logiques de contrôle pour interpoler les dites première et seconde lignes de distribution (32, 35) et identifier une ligne de distribution médiane (36) des dents sur les modèles mandibulaire et maxillaire (4,10).
